(19) Europäisches Patentamt
European Patent Office
Office européen des brevets

(11) **EP 3 207 002 B1**

(12) **EUROPEAN PATENT SPECIFICATION**

(45) Date of publication and mention
of the grant of the patent:
**23.03.2022 Bulletin 2022/12**

(21) Application number: **15784622.1**

(22) Date of filing: **16.10.2015**

(51) International Patent Classification (IPC):
*C04B 28/04* (2006.01)     *C04B 18/08* (2006.01)
*C04B 18/10* (2006.01)     *C04B 103/00* (2006.01)

(52) Cooperative Patent Classification (CPC):
(C-Sets available)
**C04B 18/084; C04B 18/08; C04B 18/101;**
**C04B 18/106; C04B 28/04;** C04B 2103/0088;
Y02W 30/91                                    (Cont.)

(86) International application number:
**PCT/EP2015/074055**

(87) International publication number:
**WO 2016/059231 (21.04.2016 Gazette 2016/16)**

(54) **METHOD FOR MAKING FLY ASH**

VERFAHREN ZUR HERSTELLUNG VON FLUGASCHE

PROCÉDÉ DE FABRICATION DE CENDRES VOLANTES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **16.10.2014 EP 14290312**

(43) Date of publication of application:
**23.08.2017 Bulletin 2017/34**

(73) Proprietor: **IMERTECH SAS**
**75015 Paris (FR)**

(72) Inventors:
 • **SEVAGEN, Alexandre**
   **F-87000 Limoges (FR)**
 • **PERRONNET, Murielle**
   **F-87100 Limoges (FR)**
 • **RAVAGNANI, Christian**
   **F-13540 Puyricard-Aix-en-Provence (FR)**

(74) Representative: **Haseltine Lake Kempner LLP**
   **Redcliff Quay**
   **120 Redcliff Street**
   **Bristol BS1 6HU (GB)**

(56) References cited:
   WO-A1-2013/093097     CN-A- 101 659 525
   US-A- 5 988 396        US-B1- 8 636 941
   US-B2- 8 741 054

 • **VASSILEV S V ET AL: "Phase-mineral and**
   **chemical composition of coal fly ashes as a basis**
   **for their multicomponent utilization. 1.**
   **Characterization of feed coals and fly ashes^*",**
   **FUEL, IPC SCIENCE AND TECHNOLOGY PRESS,**
   **GUILDFORD, GB, vol. 82, no. 14, 1 October 2003**
   **(2003-10-01), pages 1793-1811, XP004438142,**
   **ISSN: 0016-2361, DOI:**
   **10.1016/S0016-2361(03)00123-6**

Remarks:
   The file contains technical information submitted after
   the application was filed and not included in this
   specification

**(Cont. next page)**

(52) Cooperative Patent Classification (CPC): (Cont.)

C-Sets
**C04B 28/04, C04B 18/08, C04B 18/101,
C04B 18/106**

**Description**

<u>**TECHNICAL FIELD**</u>

The present invention generally relates to a method for making fly ash comprising combusting fuel in the presence of a mineral additive, wherein the mineral additive comprises at least one silicate, wherein the at least one silicate is an aluminosilicate. The present invention further relates to the fly ash produced by said methods, and the use of the fly ash produced by said methods as a pozzolan, for example in cementitious compositions such as Portland cement and concrete.

<u>**BACKGROUND OF THE INVENTION**</u>

Fly ash is one of the residues made during combustion of fuel (e.g. coal, biofuel) and comprises the generally spherical and glassy fine particles that rise with the flue gases. This is in contrast to ash that does not rise with the flue gases, for example ash with larger particle sizes, which is known as bottom ash. The exact composition of fly ash varies depending on the particular fuel used and method of combustion, but generally fly ash comprises silica ($SiO_2$), alumina ($Al_2O_3$) and calcium oxide (CaO), all of which may be present in amorphous and/or crystalline forms. The fly ash may also comprise one or more of iron oxide (e.g. $Fe_2O_3$), magnesium oxide (MgO), potassium oxide ($K_2O$), sodium oxide ($Na_2O$) and sulphur trioxide ($SO_3$).

It is generally desirable to capture fly ash before it is released into the atmosphere in order to reduce pollution. The captured fly ash may be used for numerous applications, for example in cement, concrete, road construction and filling, underground mining and waste stabilisation. The composition and properties of the fly ash may be affected by changing the method by which the fly ash is made.

US 8,741,054 provides combustion products of hydrocarbon fuels and controlled amounts of metal oxide strength enhancing materials which are useful as additives to cementitious materials.

It is an object of the present invention to provide alternative and/or improved methods of making fly ash, which may provide alternative and/or improved fly ash, which has a desirable composition and desirable properties. For example, it is an object of the present invention to provide methods of making fly ash which produce a fly ash that has an increased pozzolanic activity and/or a decreased loss-on-ignition (LOI). It is a further object of the present invention to provide a fly ash that is particularly suitable for use in cementitious compositions such as cement (e.g. blended cement or Portland cement) and concrete.

<u>**SUMMARY OF THE INVENTION**</u>

In accordance with the present invention there is provided the use of fly ash as a pozzolan wherein the fly ash is obtained by a method according to claim 1, the method comprising combusting fuel in the presence of a mineral additive, wherein the mineral additive comprises at least one silicate wherein the at least one silicate is an aluminosilicate, wherein the mineral additive comprises less than 20 wt% calcium oxide, and wherein the mineral additive is combined with the fuel prior to combustion and/or added to the furnace during combustion.

In accordance with the present invention there is also provided a method of making a cementitious composition comprising fly ash in accordance with claim 3.

The method may increase the pozzolanic activity of the fly ash and thus may be a method of increasing the pozzolanic activity of fly ash. The fly ash may, for example, have a pozzolanic activity that is at least about 5% greater than the pozzolanic activity of a fly ash made by the same method in the absence of the mineral additive.

The method may decrease the loss-on-ignition (LOI) of the fly ash and thus may be a method of decreasing the LOI of fly ash. The fly ash may, for example, have a LOI that is at least about 5% less than the LOI of a fly ash made by the same method in the absence of the mineral additive.

The method may increase the strength activity index of the fly ash in concrete and thus may be a method of increasing the strength activity index of the fly ash in concrete. The fly ash may, for example, have a strength activity index that is at least about 5% greater than the strength activity index of a fly ash made by the same method in the absence of the mineral additive.

Thus, as described herein, there is provided a use of a mineral additive comprising at least one silicate to increase the pozzolanic activity of fly ash and/or to increase the strength activity index of fly ash and/or to decrease the LOI of fly ash. For example, the mineral additive may be used to increase the pozzolanic activity of the fly ash and/or to increase the strength activity index of the fly ash and/or to decrease the LOI of the fly ash by combusting fuel in the presence of the mineral additive.

The fly ash "made by the same method in the absence of the mineral additive" may not meet one or more of the standard requirements for use in concrete (e.g. one or more of the standard requirements set out in ASTM C618 or EN 450-1:2012, such as the strength activity index, amount of reactive silica in the amorphous phase, $Ca(OH)_2$ demand and/or LOI). The use of a mineral additive comprising at least one silicate as described herein may, for example, improve one or more of the properties of the fly ash. The use of a mineral additive comprising at least one silicate as described herein may, for example, improve one or more of the properties of the fly ash such that one or more of the standard requirements for use in concrete is/are met. For example, the use of a mineral additive comprising at least one silicate as described herein may increase the pozzolanic activity of the fly ash and/or increase the strength activity index of the fly ash and/or decrease the LOI of the fly ash such that the fly ash meets one or more of these standard requirements for use in concrete (e.g. the standard requirements set out in ASTM C618 - 12a or EN 450-1:2012). For example, the use of a mineral additive comprising at least one silicate as described herein may improve one or more of the properties of the fly ash such that all of the standard requirements for use in concrete (e.g. all of the standard requirements set out in ASTM C618 - 12a or EN 450-1:2012) are met.

The fly ash "made by the same method in the absence of the mineral additive" may meet one or more of the requirements for use in concrete (e.g. the standard requirements set out in ASTM C618 - 12a or EN 450-1:2012, such as the strength activity index, amount of reactive silica in the amorphous phase, $Ca(OH)_2$ demand and/or LOI). The use of a mineral additive comprising at least one silicate as described herein may, for example, improve the values of these one or more requirements (i.e. in comparison to the fly ash "made by the same method in the absence of the mineral additive").

Also described herein, there is provided a fly ash. The fly ash may, for example, be a fly ash with an increased pozzolanic activity and/or an increased strength activity index and/or a decreased LOI. The fly ash may, for example, be obtained by or obtainable by the method of the first aspect of the present invention.

In certain embodiments of any aspect of the present invention, the fly ash has a pozzolanic activity that is at least about 5%, or at least about 10%, or at least about 20% greater than the pozzolanic activity of a fly ash made by the same method in the absence of the mineral additive.

The pozzolanic activity of the fly ash may, for example, be determined by the amount of amorphous (glassy) content in the fly ash and/or the amount of available/reactive silica in the amorphous phase of the fly ash and/or by the $Ca(OH)_2$ demand of the fly ash.

In certain embodiments of any aspect of the present invention, the fly ash has an amorphous content (glassy content) that is at least about 5% greater than the amorphous content of a fly ash made by the same method in the absence of the mineral additive. For example, the fly ash may have an amorphous content that is at least about 10% greater, or at least about 15% greater than the amorphous content of a fly ash made by the same method in the absence of the mineral additive.

In certain embodiments of any aspect of the present invention, the fly ash has an amorphous content that is up to about 50% greater than the amorphous content of a fly ash made by the same method in the absence of the mineral additive. For example, the fly ash may have an amorphous content that is up to about 40% greater, or up to about 35% greater, or up to about 30% greater, or up to about 10% greater than the amorphous content of a fly ash made by the same method in the absence of the mineral additive.

In certain embodiments of any aspect of the present invention, the absolute value of the amorphous content of the fly ash increases by an absolute value ranging from about 1 wt% to about 95 wt%, for example from about 10 wt% to about 75 wt%, for example from about 10 wt% to about 50 wt% in comparison to a fly ash made by the same method in the absence of the mineral additive.

In certain embodiments of any aspect of the present invention, the fly ash has an amorphous content ranging from about 5 wt% to about 95 wt%, for example ranging from about 10 wt% or about 20 wt% or about 40 wt% or about 50 wt% to about 90 wt% or about 75 wt% or about 60 wt%.

In certain embodiments of any aspect of the present invention, the fly ash comprises at least about 5% more available silica in the amorphous phase than a fly ash made by the same method in the absence of the mineral additive. For example, the fly ash may comprise at least about 6% more, or at least about 7% more, or at least about 10% more available silica in the amorphous phase than a fly ash made by the same method in the absence of the mineral additive.

In certain embodiments of any aspect of the present invention, the fly ash comprises up to about 100% more available silica in the amorphous phase than a fly ash made by the same method in the absence of the mineral additive. For example, the fly ash may comprise up to about 90%, or up to about 80%, or up to about 70%, or up to about 50%, or up to about 20% more available silica in the amorphous phase than a fly ash made by the same method in the absence of the mineral additive.

In certain embodiments of any aspect of the present invention, the absolute value of available silica in the amorphous phase of the fly ash increases by an absolute value ranging from about 1 wt% to about 75 wt%, for example from about 25 wt% to about 65 wt%, for example from about 25 wt% to about 55 wt% in comparison to a fly ash made by the same method in the absence of the mineral additive.

In certain embodiments of any aspect of the present invention, the fly ash comprises from about 1 wt% to about 100 wt% available silica in the amorphous phase. For example, the fly ash may comprise from about 25 wt% to about 95 wt%, for example from about 50 wt% to about 80 wt% available silica in the amorphous phase.

In certain embodiments of any aspect of the present invention, the fly ash has a $Ca(OH)_2$ demand that is at least about 5% greater than the $Ca(OH)_2$ demand of a fly ash made by the same method in the absence of the mineral additive. For example, the fly ash may have a $Ca(OH)_2$ demand that is at least about 10% greater, or at least about 15% greater, or at least about 20% greater than the $Ca(OH)_2$ demand of a fly ash made by the same method in the absence of the mineral additive.

In certain embodiments of any aspect of the present invention, the fly ash has a $Ca(OH)_2$ demand that is up to about 800% greater than the $Ca(OH)_2$ demand of a fly ash made by the same method in the absence of the mineral additive. For example, the fly ash may have a $Ca(OH)_2$ demand that is up to about 400% greater, or up to about 315% greater, or up to about 300% greater, or up to about 100% greater, or up to about 80% greater, or up to about 60% greater than the $Ca(OH)_2$ demand of a fly ash made by the same method in the absence of the mineral additive.

In certain embodiments of any aspect of the present invention, the absolute value of the $Ca(OH)_2$ demand of the fly ash increases by an absolute value ranging from about 1 to about 1300 mg $Ca(OH)_2$ per gram of fly ash. For example, the absolute value of the $Ca(OH)_2$ demand of the fly ash may increase by an absolute value ranging from about 650 to about 1300 mg $Ca(OH)_2$ per gram of fly ash, for example an absolute value ranging from about 250 to about 650 mg $Ca(OH)_2$ per gram of fly ash, in comparison to a fly ash made by the same method in the absence of the mineral additive.

In certain embodiments of any aspect of the present invention, the fly ash has a $Ca(OH)_2$ demand ranging from about 650 to about 1400 mg $Ca(OH)_2$ per gram of the fly ash. For example, the fly ash may have a $Ca(OH)_2$ demand ranging from about 660 to about 1000, for example from about 900 to about 1400 mg $Ca(OH)_2$ per gram of fly ash.

In certain embodiments of any aspect of the present invention, the fly ash has a strength activity index in concrete that is at least about 5% greater than the strength activity index in concrete of a fly ash made by the same method in the absence of the mineral additive. For example, the fly ash may have a strength activity index in cement and/or concrete that is at least about 6% greater, or 7% greater, or 8% greater, or 10% greater than the strength activity index in concrete of fly ash made by the same method in the absence of the mineral additive.

In certain embodiments of any aspect of the present invention, the fly ash has a strength activity index in concrete that is up to about 80% greater than the strength activity index of a fly ash made by the same method in the absence of the mineral additive. For example, the fly ash may have a strength activity index that is up to about 70% greater, for example up to about 50% greater, for example up to about 20% greater, for example up to about 15% greater than the strength activity index of a fly ash made by the same method in the absence of the mineral additive.

In certain embodiments of any aspect of the present invention, the absolute value of the strength activity index of the fly ash in concrete increases by an absolute value ranging from about 1 to about 80. For example the strength activity index of the fly ash in concrete may increase by an absolute value ranging from about 10 to about 55, for example from about 25 to about 80 in comparison to a fly ash made by the same method in the absence of the mineral additive.

In certain embodiments of any aspect of the present invention, the fly ash has a strength activity index in concrete ranging from about 75 to about 150, for example from about 75 to about 130, for example from about 75 to about 100.

In certain embodiments of any aspect of the present invention, the fly ash has a loss-on-ignition (LOI) that is at least about 5% less than the LOI of a fly ash made by the same method in the absence of the mineral additive. For example, the fly ash may have a LOI that is at least about 15% less, or at least about 25% less, or at least about 35% less than the LOI of a fly ash made by the same method in the absence of the mineral additive.

In certain embodiments of any aspect of the present invention, the fly ash has a loss-on-ignition (LOI) that is up to about 100% less than the LOI of a fly ash made by the same method in the absence of the mineral additive. For example, the fly ash may have a LOI that is up to about 99%, for example up to about 90%, for example up to about 75%, for example up to about 50%, for example up to about 40%, for example up to about 30% less than the LOI of a fly ash made by the same method in the absence of the mineral additive.

In certain embodiments of any aspect of the present invention, the absolute value of the LOI of the fly ash decreases by an absolute value ranging from about 0.01% to about 30%, for example from about 5% to about 6.99%, for example from about 23% to about 30% in comparison to a fly ash made by the same method in the absence of a mineral additive.

In certain embodiments of any aspect of the present invention, the fly ash has a LOI ranging from about 0.01% to about 9%, for example from about 0.01% to about 7%, for example from about 0.01% to about 4%, for example from about 0.01% to about 2%.

In certain embodiments of any aspect of the present invention, the fly ash has a molar base/acid ratio of less than 1. For example, the fly ash may be a coal ash.

In certain embodiments of any aspect of the present invention, the fly ash has a molar base/acid ratio of greater than 1. For example, the fly ash may be woodpellets ash.

According to the present invention, the at least one silicate is an aluminosilicate. The aluminosilicate may, for example, be selected from the group consisting of kaolin (e.g. hydrous kaolin or calcined kaolin), halloysite, ball clay, lump clay, bauxite clay, calcined clay, smectite, bentonite, clayey marl, marl, calcerous marl, andalusite, kyanite, sillimanite, perlite, mica, chlorite, attapulgite or palygorskite and pyrophyllite.

In certain embodiments of any aspect of the present invention, the amount of dry silicate added to the wet fuel relative to the amount of ash in the dry fuel at 550°C ranges from about 0.01 to about 10.

In certain embodiments of any aspect of the present invention, the mineral additive further comprises an alkaline earth metal-containing mineral. For example, the mineral additive may further comprise a magnesium-containing mineral or a calcium-containing mineral.

In certain embodiments of any aspect of the present invention, the mineral additive further comprises one or more of calcium carbonate (e.g. GCC or PCC), limestone, marble, chalk, dolomite, aragonitic sand, sea shells, coral, cement kiln dust, talc, brucite, magnesium carbonate, a magnesium carbonate-containing mineral and a calcium carbonate-containing mineral.

In certain embodiments of any aspect of the present invention, the mineral additive further comprises a high surface area silicate mineral. For example, the mineral additive may further comprise diatomaceous earth.

In certain embodiments of any aspect of the present invention, the mineral additive comprises from about 15 wt% to about 100 wt% silicate. For example, the mineral additive may comprise from about 15 wt% or from about 20 wt% or from about 40 wt% to about 100 wt% silicate. For example, the mineral additive may comprise from about 15 wt% or from about 20 wt% or from about 40 wt% to about 85 wt% silicate. For example, the mineral additive may comprise from about 40 wt% to about 100 wt% silicate.

In certain embodiments of any aspect of the present invention, the mineral additive comprises from about 15 wt% to about 100 wt% aluminosilicate. For example, the mineral additive may comprise from about 15 wt% or from about 20 wt% or from about 40 wt% to about 100 wt% aluminosilicate. For example, the mineral additive may comprise from about 15 wt% or from about 20 wt% or from about 40 wt% to about 85 wt% aluminosilicate. For example, the mineral additive may comprise from about 40 wt% to about 100 wt% aluminosilicate.

In certain embodiments of any aspect of the present invention, the fuel comprises one or more of coal, petroleum coke, lignite, biofuel (e.g. biofuel derived from biomass such as wheat straw, wood pellets, straw pellets, peat, lignocellulose, waste biomass such as bagasse, wheat stalks, corn stalks, oat stalks and/or energy biomass such as grasses of the Miscanthus genus), refuse-derived fuel (e.g. municipal solid waste, commercial waste, industrial waste, biomass waste and animal waste).

In certain embodiments of any aspect of the present invention, the method of making fly ash is carried out in a fossil fuel power plant. In certain embodiments, the method of making fly ash is carried out in a biomass power plant. In certain embodiments, the method of making fly ash is carried out in a waste-to-energy power plant.

In certain embodiments of any aspect of the present invention, the method of making fly ash is carried out using one or more of a pulverized-fuel unit, grate-firing unit, fluidized bed unit (circulating and/or bubbling) and a gasifier.

In certain embodiments of any aspect of the present invention, the mineral additive is combined with the fuel prior to and/or during combustion. In certain embodiments, the mineral additive is added over the firing zone.

In certain embodiments of any aspect of the present invention, the combustion is carried out at a temperature of from about 200°C to about 2300°C.

In certain embodiments of any aspect of the present invention, the combustion is carried out for a period of time ranging from about 0.1 seconds to about 24 hours.

In certain embodiments of any aspect of the present invention, the fly ash is incorporated into a cementitious composition.

In certain embodiments of any aspect of the present invention, the cementitious composition may be Portland cement. In certain embodiments of any aspect of the present invention, the cementitious composition may be a blended cement.

In certain embodiments of any aspect of the present invention, the cementitious composition may be concrete.

Certain embodiments of any aspect of the present invention, may provide one or more of the following advantages:

- Fly ash with increased pozzolanic activity;
- Fly ash with an increased amount of amorphous (glassy) phase;
- Fly ash with an increased amount of available silica in the amorphous phase;
- Fly ash with an increased $Ca(OH)_2$ demand;
- Fly ash with a decreased loss-on-ignition (LOI);
- Fly ash with a decreased amount of unburnt carbon;
- Fly ash with an increased strength activity index in concrete;
- Fly ash that meets the standard requirements of ASTM C618 - 12a and/or EN 450-1:2012;
- Cementitious compositions (e.g. cement or concrete) with increased strength (e.g. increased strength activity index);

• Cementitious compositions (e.g. cement or concrete) with reduced permeability; Cementitious compositions (e.g. concrete) with improved resistance to chemical and/or thermal stress.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

## DETAILED DESCRIPTION OF THE INVENTION

*Method of Making Fly Ash*

The present invention provides methods for making fly ash. The methods comprise combusting a fuel in the presence of a mineral additive, wherein the mineral additive comprises at least one silicate.

The heat produced by the combustion may, for example, be used to generate electrical power. The method may, for example, be carried out in an industrial power plant (power station). For example, the method may be carried out in a fossil fuel power plant or a biomass power plant or a waste-to-energy power plant. For example, the method may be carried out in a pulverized fuel power plant, for example a pulverized coal power plant. For example, the method may be carried out using fluidized bed combustion (e.g. circulating fluidized bed combustion). The method may, for example, be carried out using one or more of a pulverized-fuel unit, grate-firing unit, fluidized bed unit (circulating and/or bubbling) and a gasifier.

The fuel may, for example, comprise one or more of coal, petroleum coke, lignite, biofuel (e.g. biofuel derived from biomass such as wheat straw, wood pellets, straw pellets, peat, lignocellulose, waste biomass such as bagasse, wheat stalks, corn stalks, oat stalks and/or energy biomass such as grasses of the Miscanthus genus), refuse-derived fuel (e.g. municipal solid waste, commercial waste, industrial waste, biomass waste and animal waste). Exemplary coal sources include, without limitation, brown coal, lignite and bitumous coal, such as, for example, eastern bituminous coal, coking coal, Jurassic coal, Triassic coal, Permian coal, and carboniferous coal.

The fuel and mineral additive may, for example, be combined prior to combustion. For example, the fuel and mineral additive may be combined before being introduced into a furnace. For example, the fuel and mineral additive may be mixed and/or blended prior to combustion, for example prior to introduction into the furnace.

The mineral additive may be added to the furnace after combustion of the fuel has already started but before it has finished (i.e. during combustion). For example, the fuel and mineral additive may be combined during combustion. For example, the mineral additive may be added over the firing-zone in the combustion chamber during combustion. For example, the mineral additive may be added to a fluidized-bed reactor system (e.g. a circulating fluidized-bed system). For example, the mineral additive may be added into a lower portion and/or back end and/or upper portion of a circulating fluidized-bed reactor. For example, the mineral additive may be added to an ash-slurry side of an integrated fluidized-bed heat exchanger. The mineral additive may, for example, be added to the bottom ash stream that is gravity fed to the furnace.

The mineral additive may, for example, be combined with the fuel prior to combustion or added to the furnace during combustion. Alternatively, the mineral additive may be combined with the fuel prior to combustion and added to the furnace during combustion.

The mineral additive may, for example, contact the fuel during combustion. This may, for example, result in the formation of fly ash with the advantageous properties disclosed herein.

The combustion may, for example, be carried out at a temperature ranging from about 200°C to about 2300°C. For example, the combustion may be carried out at a temperature ranging from about 300°C or about 400°C or about 500°C or about 600°C or about 700°C or about 800°C or about 900°C or about 1000°C to about 1700°C. For example, the combustion may be carried out at a temperature ranging from about 400°C to about 2200°C or about 2100°C or about 2000°C or about 1900°C or about 1800°C or about 1700°C or about 1600°C or about 1500°C or about 1400°C or about 1300°C or about 1200°C or about 1100°C.

The combustion may, for example, be carried out for a period of time ranging from about 0.1 seconds to about 24 hours. For example, the combustion may be carried out for a period of time ranging from about 10 minutes or about 30 minutes or about 45 minutes or about 1 hour or about 2 hours or about 3 hours or about 4 hours or about 5 hours or about 6 hours or about 7 hours or about 8 hours or about 9 hours or about 10 hours or about 11 hours or about 12 hours to about 24 hours. For example, the combustion may be carried out for a period of time ranging from about 0.1 seconds to about 24 hours or about 23 hours or about 22 hours or about 21 hours or about 20 hours or about 19 hours or about 18 hours or about 17 hours or about 16 hours or about 15 hours.

The conditions of the method of combustion may, for example, be selected to provide the advantageous properties of fly ash described below.

Mineral Additive

The mineral additive used in the methods of the invention comprises at least one silicate, wherein the at least one silicate is an aluminosilicate. The mineral additive may, for example, be added to the furnace in dry or slurry form.

The aluminosilicate may, for example, be a hydrous aluminosilicate. The aluminosilicate may, for example, be selected from the group consisting of kaolin (e.g. hydrous kaolin or calcined kaolin), halloysite, ball clay, lump clay, bauxite clay, calcined clay, smectite, bentonite, clayey marl, marl, calcerous marl, andalusite, kyanite, sillimanite, perlite, mica, chlorite, attapulgite or palygorskite and pyrophyllite.

The mineral additive may, for example, comprise at least one aluminosilicate and another silicate, for example selected from quartz, tridymite, cristobalite, coesite, stishovite, lechatelierite, chalcedony and diatomite (e.g. opal). The mineral additive may, for example, comprise more than one aluminosilicate.

Hereinafter, the invention may tend to be discussed in terms of clay. However, the invention should not be construed to be limited as such. The description below in relation to clay may equally apply to any other silicate or aluminosilicate.

The aluminosilicate may, for example, be a hydrous clay. For example, the at least one aluminosilicate may be a hydrous clay having a moisture content of at least about 5% by weight, for example ranging from at least about 5% by weight to at least about 15% by weight.

Hydrous clay may, for example, include lump clay, for example, hydrous clay that may be partially dried to a moisture content ranging from at least about 1% by weight to at least about 50% by weight. For example, the lump clay may be partially dried to a moisture content ranging from about 4% by weight to about 16% by weight, for example from about 8% by weight to about 12% by weight, for example from about 9% by weight to about 11% by weight (e.g. about 10% by weight), or from about 5% by weight to about 10% by weight, or from about 10% by weight to about 15% by weight.

The lump clay may, for example, comprise hydrous clay agglomerates having a size of about 1 inch (2.54 cm) or less. For example, the lump clay may comprise hydrous clay agglomerates having a size of about 3/4 inch or less (1.91 cm or less), for example about 1/2 inch or less (1.27 cm or less), for example 1/4 inch or less (0.64 cm or less) (e.g. to about 1/8 inch (0.32 cm) or less).

For example, the lump clay may comprise hydrous clay agglomerates having a maximum lump size of not more than about 3 inches (7.62 cm), for example not more than 2 inches (5.08 cm), for example not more than about 1 inch (2.54 cm).

For example, the lump clay may comprise hydrous clay agglomerates having a maximum lump size ranging from about 1/4 inch (0.64 cm) to about 2 inches (5.08 cm), for example from about 1/4 inch (0.64 cm) to about 1 inch (2.54 cm).

The hydrous clay used herein may take various forms and/or may have undergone various processes. The hydrous clay may, for example, include one or more of lump clay, clay that has been shredded and/or crushed, non-beneficiated clay, kaolinite, ball clay (e.g. clay that includes about 20-80% kaolinite, 10-25% mica, and/or 6-65% quartz), and clay derived from overburden from a kaolinite mining operation (e.g. clay derived from material located over kaolinite deposits being mined). For example, the hydrous clay may be clay derived from crude clay having a moisture content of at least about 15%.

The hydrous clay may have a BET surface area of at least about 9 m$^2$/g, for example at least about 10 m$^2$/g or at least about 15 m$^2$/g or at least about 25 m$^2$/g.

As used herein, non-beneficiated clay may include clay that has not been subjected to at least one process chosen from dispersion, blunging, selective flocculation, ozone bleaching, classification, magnetic separation, chemical leaching, froth flotation, and dewatering of clay.

At least a portion of the hydrous clay may, for example, be kaolinite, for example, a hydrous aluminosilicate having a formula $Al_2Si_2O_5(OH)_4$. For example, at least a portion of the hydrous clay may include montmorillonitic kaolin.

For example, the hydrous clay may be a combination of hydrous clays. For example, at least one hydrous clay may be selected to provide bonding strength to the combination of hydrous clays. For example, at least one hydrous clay may be selected to increase the coarseness of the hydrous clay combination.

The hydrous clay may, for example, be at least partially converted to a calcined clay in the furnace. The at least partially calcined clay may, for example, serve to adsorb at least a portion of alkali present in the furnace.

The mineral additive may, for example, comprise from about 15 wt% to about 100 wt% silicate. For example, the mineral additive may comprise from about 15 wt% or about 20 wt% or about 25 wt% or about 30 wt% or about 35 wt% or about 40 wt% to about 100 wt% silicate. For example, the mineral additive may comprise from about 15 wt% to about 95 wt% or about 90 wt% or about 85 wt% or about 80 wt% or about 75 wt% or about 70 wt% or about 65 wt% or about 60 wt% or about 55 wt% or about 50 wt% silicate. For example, the mineral additive may comprise from about 25 wt% to about 95 wt% or about 90 wt% or about 85 wt% or about 80 wt% or about 75 wt% or about 70 wt% or about 65 wt% or about 60 wt% or about 55 wt% or about 50 wt% silicate. For example, the mineral additive may comprise from about 35 wt% to about 95 wt% or about 90 wt% or about 85 wt% or about 80 wt% or about 75 wt% or about 70 wt% or about 65 wt% or about 60 wt% or about 55 wt% or about 50 wt% silicate. For example, the mineral additive may comprise from about 40 wt% to about 95 wt% or about 90 wt% or about 85 wt% or about 80 wt% or about 75 wt% or about 70 wt% or about 65 wt% or about 60 wt% or about 55 wt% or about 50 wt% silicate.

The mineral additive may, for example, comprise from about 15 wt% to about 100 wt% aluminosilicate. For example, the mineral additive may comprise from about 0.1 wt% or 1 wt% or 5 wt% or 10 wt% or 15 wt% or 20 wt% or 30 wt% or 40 wt% to about 100 wt% aluminosilicate. For example, the mineral additive may comprise from about 5 wt% to about 100 wt%, or about 95 wt% or about 90 wt% or about 85 wt% or about 80 wt% or about 75 wt% or about 70 wt% or about 65 wt% or about 60 wt% or about 55 wt% or about 50 wt% aluminosilicate. For example, the mineral additive may comprise from about 15 wt% to about 100 wt%, or about 95 wt% or about 90 wt% or about 85 wt% or about 80 wt% or about 75 wt% or about 70 wt% or about 65 wt% or about 60 wt% or about 55 wt% or about 50 wt% aluminosilicate. For example, the mineral additive may comprise from about 25 wt% to about 100 wt%, or about 95 wt% or about 90 wt% or about 85 wt% or about 80 wt% or about 75 wt% or about 70 wt% or about 65 wt% or about 60 wt% or about 55 wt% or about 50 wt% aluminosilicate. For example, the mineral additive may comprise from about 35 wt% to about 100 wt%, or about 95 wt% or about 90 wt% or about 85 wt% or about 80 wt% or about 75 wt% or about 70 wt% or about 65 wt% or about 60 wt% or about 55 wt% or about 50 wt% aluminosilicate. For example, the mineral additive may comprise from about 40 wt% to about 100 wt%, or about 95 wt% or about 90 wt% or about 85 wt% or about 80 wt% or about 75 wt% or about 70 wt% or about 65 wt% or about 60 wt% or about 55 wt% or about 50 wt% aluminosilicate.

The mineral additive may, for example, comprise one or more additional minerals. For example, the mineral additive may further comprise an alkaline earth metal-containing material. For example, the mineral additive may further comprise a magnesium-containing material and/or a calcium-containing material.

For example, the mineral additive may further comprise one or more of calcium carbonate (e.g. GCC or PCC), limestone, marble, chalk, dolomite, aragonitic sand, sea shells, coral, cement kiln dust, talc, brucite, magnesium carbonate, a magnesium carbonate-containing mineral and a calcium carbonate-containing mineral.

The mineral additive may, for example, further comprise a high surface-area silicate mineral such as diatomaceous earth (diatomite or DE).

The mineral additive may, for example, comprise from about 0 wt% or 0.1 wt% to about 99.9 wt% of calcium-containing and/or magnesium-containing minerals. For example, the mineral additive may comprise from about 0.1 wt% or about 1 wt% or about 5 wt% to about 60 wt% or 55 wt% or 50 wt% or about 45 wt% or about 40 wt% or about 35 wt% or about 30 wt% or about 25 wt% or about 20 wt% of calcium-containing and/or magnesium-containing minerals.

The mineral additive may, for example, comprise less than about 40 wt% of calcium-containing minerals (e.g. calcium oxide). For example, the mineral additive may comprise less than about 35 wt% or less than about 30 wt% or less than about 25 wt% or less than about 20 wt% of calcium-containing minerals (e.g. calcium oxide). For example, the mineral additive may comprise equal to or greater than 0 wt% calcium-containing minerals (e.g. calcium oxide) or equal to or greater than about 2 wt% or equal to or greater than about 5 wt% of calcium-containing materials (e.g. calcium oxide).

The mineral additive and/or at least one silicate (e.g. at least one aluminosilicate) may, for example, be subjected to at least one physical modification process prior to introduction into the furnace. For example, physical modification process(es) may serve to reduce the size of the at least one of the mineral additive to, for example, about 1 inch (2.54 cm) or less. For example, an exemplary physical modification process may reduce the size of the mineral additive and/or at least one silicate (e.g. at least one aluminosilicate) to about 3/4 inch or less (1.91 cm or less), for example to about 1/2 inch or less (1.27 cm or less), for example about 1/4 inch or less (0.64 cm or less ) (e.g. to about 1/8 inch (0.32 cm) or less). For example, the mineral additive and/or at least one silicate (e.g. at least one aluminosilicate) may comprise hydrous clay agglomerates having a maximum lump size of not more than about 3 inches (7.62 cm), for example not more than 2 inches (5.08 cm), for example not more than about 1 inch (2.54 cm).

Exemplary physical modification processes may include at least one of milling, hammering, roll crushing, drying, grinding, screening, extruding, triboelectric separating, liquid classifying, and air classifying.

The mineral additive and/or at least one silicate (e.g. at least one aluminosilicate) may have a measureable particle size. Particle sizes and other particle size properties referred to herein, such as particle size distribution (psd) may be measured using a SEDIGRAPH 5100 instrument as supplied by Micrometrics Corporation. For example, the size of a given particle may be expressed in terms of the diameter of a sphere of equivalent diameter that sediments through the suspension, that is, an equivalent spherical diameter or "esd". The measureable particle size may indicate the relative coarseness of the mineral additive.

For example, about 30 wt% to about 50 wt% of the mineral additive and/or at least one silicate (e.g. at least one aluminosilicate) has a particle size less than about 1 $\mu$m. For example about 35% to about 45%, for example from about 30% to about 40%, for example from about 40% to about 50% of the mineral additive and/or at least one silicate (e.g. at least one aluminosilicate) has a particle size less than about 1 $\mu$m.

For example, from about 60% to about 80% of the mineral additive and/or at least one silicate (e.g. at least one aluminosilicate) has a particle size less than about 2 $\mu$m. For example, from about 65% to about 75%, for example from about 60% to about 70%, for example from about 70% to about 80% of the mineral additive and/or at least one silicate (e.g. at least one aluminosilicate) has a particle size less than about 2 $\mu$m.

The mineral additive and/or the at least one silicate (e.g. at least one aluminosilicate) may have a measurable +325 washed screen retention of from about 0.5% to about 9%. For example, the +325 mesh wash screen retention may be from about 0.5% to about 8%, for example from about 0.5% to about 5%, for example from about 0.5% to about 1.5%, for example from about 4% to about 5%, for example from about 1% to about 4.5%, for example from about 4.5% to about 9%.

The amount of mineral additive and/or at least one silicate (e.g. at least one aluminosilicate) introduced into the furnace may be selected based on, for example, an amount sufficient to maintain boiler efficiency. One measure of boiler efficiency relates to boiler steam temperature. For example, the mineral additive may be added in an amount sufficient to maintain a boiler steam temperature ranging from about 930°C to 1010°C, for example in an amount sufficient to maintain a boiler steam temperature ranging from about 950°C to about 1010°C, for example in an amount sufficient to maintain a boiler steam temperature ranging from about 970°C to about 1010°C, for example in an amount sufficient to maintain a boiler steam temperature ranging from about 1000°C to about 1010°C.

The amount of mineral additive and/or at least one silicate (e.g. at least one aluminosilicate) used in the methods described herein may, for example, be calculated based on stoichiometric and phase diagram considerations. The amount of mineral additive and/or at least one silicate (e.g. at least one aluminosilicate) used in the methods described herein may, for example, be determined so that the molar base/acid ratio of the fuel ash will decrease.

The molar base/acid ratio of the fuel ash may, for example, be calculated using the following equation:

$$Molar\ base - acid\ ratio = \frac{(moles\ Fe2O3) + (moles\ CaO) + (moles\ MgO) + (moles\ Na2O) + (moles\ K2O)}{(moles\ SIO2) + (moles\ TiO2) + (moles\ P2O5) + (moles\ Cl) + (moles\ SO3)}$$

The amount of mineral additive and/or at least one silicate (e.g. at least one aluminosilicate) used in the methods described herein may, for example, be determined based on the pozzolanic activity of the ash of the fuel used. For example, a larger amount of mineral additive and/or at least one silicate (e.g. at least one aluminosilicate) may be used in a method that uses a fuel having an ash with a low pozzolanic activity in comparison to a method that uses a fuel having an ash with a higher pozzolanic activity.

For example, the amount of dry mineral additive (e.g. at least one silicate such as aluminosilicate) added to the wet fuel relative to the amount of ash in the dry fuel at 550°C (e.g. % dry mineral additive added to the wet fuel / % ash in dry fuel at 550°C) may range from about 0.01 to about 10. For example, the amount of dry mineral additive (e.g. at least one silicate such as aluminosilicate) added to the wet fuel relative to the amount of ash in the dry fuel at 550°C may range from about 0.1 or about 0.5 or about 1 or about 2 or about 3 or about 4 or about 5 or about 6 to about 10. For example, the amount of dry mineral additive (e.g. at least one silicate such as aluminosilicate) added to the wet fuel relative to the amount of ash in the dry fuel at 550°C may range from about 5 to about 10 or about 9 or about 8 or about 7 or about 6.

For example, the fuel may be petroleum coke and the amount of dry mineral additive (e.g. at least one silicate such as aluminosilicate) added to the wet fuel relative to the amount of ash in the dry fuel at 550°C (e.g. % dry mineral additive added to the wet fuel / % ash in dry fuel at 550°C) may range from about 0.1 to about 5. For example from about 0.2, or from about 0.5, or about 1.0 to about 5, for example from about 0.1 to about 5, or about 4, or about 3, or about 2, or about 1.5.

For example, the fuel may be biomass and the amount of dry mineral additive (e.g. at least one silicate such as aluminosilicate) added to the wet fuel relative to the amount of ash in the dry fuel at 550°C (e.g. % dry mineral additive added to the wet fuel / % ash in dry fuel at 550°C) may range from about 0.01 to about 8. For example from about 0.05 or from about 0.1 or about 0.2, or from about 0.5, or about 1.0 to about 8, for example from about 0.1 to about 7, or about 6, or about 5, or about 4, or about 3.

For example, the fuel may be coal and the amount of dry mineral additive (e.g. at least one silicate such as aluminosilicate) added to the wet fuel relative to the amount of ash in the dry fuel at 550°C (e.g. % dry mineral additive added to the wet fuel / % ash in dry fuel at 550°C) may range from about 0.01 to about 1. For example from about 0.05 or from about 0.1 or from about 0.2, or from about 0.3, or about 0.4, or about 0.5 to about 1, for example from about 0.1 to about 0.9, or about 0.8, or about 0.7, or about 0.6, or about 0.5, or about 0.4.

*Fly Ash*

The present invention provides fly ash and methods for making fly ash. The fly ash of the invention may, for example, be obtained by or obtainable by the methods of the invention. The fly ash of the invention and the fly ash made by the methods of the invention may, for example, be according to any embodiment described herein, including all combinations thereof.

The fly ash "made by the same method in the absence of the mineral additive" may not meet one or more of the standard requirements for use in concrete (e.g. one or more of the standard requirements set out in ASTM C618 or EN 450-1:2012, such as the strength activity index, amount of reactive silica in the amorphous phase, $Ca(OH)_2$ demand and/or LOI). The use of a mineral additive comprising at least one silicate as described herein may, for example, improve one or more of the properties of the fly ash. The use of a mineral additive comprising at least one silicate as described herein may, for example, improve one or more of the properties of the fly ash such that one or more of the standard requirements for use in concrete is/are met. For example, the use of a mineral additive comprising at least one silicate as described herein may increase the pozzolanic activity of the fly ash and/or increase the strength activity index of the fly ash and/or decrease the LOI of the fly ash such that the fly ash meets one or more of these standard requirements for use in concrete (e.g. the standard requirements set out in ASTM C618 - 12a or EN 450-1:2012). For example, the use of a mineral additive comprising at least one silicate as described herein may improve one or more of the properties of the fly ash such that all of the standard requirements for use in concrete (e.g. all of the standard requirements set out in ASTM C618 - 12a or EN 450-1:2012) are met.

The fly ash "made by the same method in the absence of the mineral additive" may meet one or more of the requirements for use in concrete (e.g. the standard requirements set out in ASTM C618 - 12a or EN 450-1:2012, such as the strength activity index, amount of reactive silica in the amorphous phase, $Ca(OH)_2$ demand and/or LOI). The use of a mineral additive comprising at least one silicate as described herein may, for example, improve the values of these one or more requirements (i.e. in comparison to the fly ash "made by the same method in the absence of the mineral additive").

The fly ash may, for example, have an increased pozzolanic activity, for example, in comparison to a fly ash made by the same method in the absence of the mineral additive. For example, the fly ash may have a pozzolanic activity that is at least about 5% greater than the pozzolanic activity of a fly ash made by the same method in the absence of the mineral additive. For example, the fly ash may have a pozzolanic activity that is at least about 10% or at least about 15% or at least about 20% or at least about 25% or at least about 30% or at least about 35% or at least about 40% or at least about 45% or at least about 50% greater than the pozzolanic activity of a fly ash made by the same method in the absence of the mineral additive.

The fly ash may, for example, have a pozzolanic activity that is up to about 800% greater than the pozzolanic activity of a fly ash made by the same method in the absence of the mineral additive. For example, the fly ash may have a pozzolanic activity that is up to about 700% or up to about 600% or up to about 500% or up to about 400% or up to about 300% or up to about 200% or up to about 100% greater than the pozzolanic activity of a fly ash made by the same method in the absence of the mineral additive. For example, the fly ash may have a pozzolanic activity that is up to about 90% or up to about 80% or up to about 75% or up to about 70% or up to about 60% or up to about 50% or up to about 40% or up to about 30% or up to about 20% or up to about 10% greater than the pozzolanic activity of a fly ash that is made by the same method in the absence of the mineral additive.

The pozzolanic activity of the fly ash may, for example, be determined by the amorphous (glassy) content of the fly ash and/or the amount of available (reactive) silica in the amorphous phase of the fly ash and/or by the $Ca(OH)_2$ demand of the fly ash.

The fly ash may, for example, have an amorphous content (glassy content) that is at least about 5% greater than the amorphous content of a fly ash made by the same method in the absence of the mineral additive. For example, the fly ash may have an amorphous content that is at least about 10% greater, or at least about 15% greater, or at least about 20% greater, or at least about 25% greater, or at least about 30% greater than the amorphous content of a fly ash made by the same method in the absence of the mineral additive.

The fly ash may, for example, have an amorphous content that is up to about 50% greater, for example up to about 45% greater, for example up to about 40% greater, for example up to about 35% greater, for example up to about 33% greater, for example up to about 30% greater, for example up to about 25% greater, for example up to about 20% greater, for example up to about 15% greater, for example up to about 10% greater than the amorphous content of a fly ash made by the same method in the absence of the mineral additive.

The fly ash may, for example, be an ash having a molar base/acid ratio of less than 1 (e.g. coal ash) and have an amorphous content that is at least about 5% greater than the amorphous content of a fly ash made by the same method in the absence of the mineral additive. For example, the fly ash may be an ash having a molar base/acid ratio of less than 1 (e.g. coal ash) and have an amorphous content that is at least about 10% greater or at least about 15% greater or at least about 20% greater than the amorphous content of a fly ash made by the same method in the absence of the mineral additive.

The fly ash may, for example, be an ash having a molar base/acid ratio of less than 1 (e.g. coal ash) and have an amorphous content that is up to about 30% greater than the amorphous content of a fly ash made by the same method in the absence of the mineral additive. For example, the fly ash may be an ash having a molar base/acid ratio of less than 1 (e.g. coal ash) and have an amorphous content that is up to about 25% greater, for example up to about 20% greater, for example up to about 15% greater, for example up to about 10% greater, for example up to about 8% greater than the amorphous content of a fly ash made by the same method in the absence of the mineral additive.

The fly ash may, for example, be an ash having a molar base/acid ratio of greater than 1 (e.g. woodpellets ash) and have an amorphous content that is at least about 5% greater than the amorphous content of a fly ash made by the same method in the absence of the mineral additive. For example, the fly ash may be an ash having a molar base/acid ratio of greater than 1 (e.g. woodpellets ash) and have an amorphous content that is at least about 10% greater or at least about 15% greater or at least about 20% greater or at least about 25% greater or at least about 30% greater or at least about 35% greater or at least about 40% greater than the amorphous content of a fly ash made by the same method in the absence of the mineral additive.

The fly ash may, for example, be an ash having a molar base/acid ratio of greater than 1 (e.g. woodpellets ash) and have an amorphous content that is up to about 50% greater, for example up to about 45% greater, for example up to about 40% greater, for example up to about 35% greater, for example up to about 33% greater, for example up to about 30% greater, for example up to about 25% greater than the amorphous content of a fly ash made by the same method in the absence of the mineral additive.

The absolute value of the amorphous content of the fly ash may, for example, increase by at least an absolute value of about 1 wt% in comparison to a fly ash made by the same method in the absence of the mineral additive (e.g. if the absolute value of the amorphous content of the fly ash made by the same method in the absence of the mineral additive was 10 wt%, the fly ash made by combusting fuel in the presence of the mineral additive would have an amorphous content of at least about 11 wt%). For example, the absolute value of the amorphous content of the fly ash may increase by an absolute value of at least about 5%, for example at least about 10 wt%, for example at least about 15 wt%, for example at least about 20 wt%, for example at least about 25 wt%, for example at least about 30 wt%, for example at least about 35 wt%, for example at least about 40 wt%, for example at least about 50 wt% in comparison to a fly ash made by the same method in the absence of the mineral additive.

The absolute value of the amorphous content of the fly ash may, for example, increase by an absolute value up to about 95 wt% in comparison to a fly ash made by the same method in the absence of the mineral additive (e.g. if the absolute value of the amorphous content of the fly ash made by the same method in the absence of the mineral additive was 10 wt%, the fly ash made by combusting fuel in the presence of the mineral additive would have an amorphous content of up to about 105 wt%). For example, the absolute value of the amorphous content of the fly ash may increase by an absolute value of up to about 90 wt%, for example up to about 85 wt%, for example up to about 70 wt%, for example up to about 65 wt%, for example up to about 60 wt% in comparison to a fly ash made by the same method in the absence of the mineral additive. For example, the absolute value of the amorphous content of the fly ash may increase by an absolute value of up to about 50 wt%, for example up to about 45 wt%, for example up to about 40 wt%, for example up to about 35 wt% in comparison to a fly ash made by the same method in the absence of the mineral additive.

The amorphous phase may constitute from about 5 wt% to about 95 wt% of the fly ash. For example, the amorphous phase may constitute from about 10 wt% or about 15 wt% or about 20 wt% or about 25 wt% or about 30 wt% or about 35 wt% or about 40 wt% or about 45 wt% or about 50 wt% to about 95 wt% of the fly ash. For example, the amorphous phase may constitute from about 5 wt% to about 90 wt% or about 85 wt% or about 80 wt% or about 75 wt% or about 70 wt% or about 65 wt% or about 60 wt% or about 55 wt% or about 50 wt% or about 45 wt% or about 40 wt% or about 35 wt% or about 30 wt% or about 25 wt% or about 20 wt% of the fly ash.

The amount of amorphous phase in the fly ash may be determined, for example, by quantitative X-Ray Diffraction as obtained by acquiring an X-Ray diffractogram on < 40 $\mu$m unoriented fly ash powder with 30% zincite as internal standard and modelling the diffractogram by Topas software (Bruker).

The fly ash may, for example, comprise at least about 5% more available silica in the amorphous phase than a fly ash made by the same method in the absence of the mineral additive. For example, the fly ash may comprise at least about 6% more, or at least about 7%, or at least about 8% more or at least about 9% more or at least about 10% more available silica in the amorphous phase than a fly ash made by the same method in the absence of the mineral additive. For example, the fly ash may comprise at least about 15% more or at least about 20% more or at least about 25% more available silica in the amorphous phase than a fly ash made by the same method in the absence of the mineral additive.

The fly ash may, for example, comprise up to about 100% more available silica in the amorphous phase than a fly ash made by the same method in the absence of the mineral additive. For example, the fly ash may comprise up to about 90% more, for example up to about 80% more, for example up to about 70% more, for example up to about 60% more, for example up to about 50% more, for example up to about 40% more, for example up to about 30% more, for example up to about 20% more, for example up to about 15% more, for example up to about 10% more available silica in the amorphous phase than a fly ash made by the same method in the absence of the mineral additive.

The fly ash may, for example, be an ash having a molar base/acid ratio of less than 1 (e.g. coal ash) and comprise at least about 5% more available silica in the amorphous phase than a fly ash made by the same method in the absence of the mineral additive. For example, the fly ash may be an ash having a molar base/acid ratio of less than 1 (e.g. coal ash) and comprise at least about 6% or at least about 7% or at least about 8% or at least about 9% or at least about 10% more available silica in the amorphous phase than a fly ash made by the same method in the absence of the mineral additive.

The fly ash may, for example, be an ash having a molar base/acid ratio of less than 1 (e.g. coal ash) and comprise up to about 70 wt%, or up to about 60 wt% or up to about 50 wt% or up to about 40 wt% or up to about 30 wt% or up to about 20 wt% or up to about 15 wt% or up to about 10 wt% more available silica in the amorphous phase than a fly ash made by the same method in the absence of the mineral additive.

The fly ash may, for example, be an ash having a molar base/acid ratio of more than 1 (e.g. woodpellets ash) and comprise at least about 5% more available silica in the amorphous phase than a fly ash made by the same method in the absence of the mineral additive. For example, the fly ash may be an ash having a molar base/acid ratio of more than 1 (e.g. woodpellets ash) and comprise at least about 10% more, for example at least about 20% more, for example at least about 30% more, for example at least about 40% more, for example at least about 50% more available silica in the amorphous phase than a fly ash made by the same method in the absence of the mineral additive.

The fly ash may, for example be an ash having a molar base/acid ratio of more than 1 (e.g. woodpellets ash) and comprise up to about 100% more, for example up to about 90% more, for example up to about 80% more, for example up to about 70% more, for example up to about 60% more, for example up to about 50% more, for example up to about 40% more, for example up to about 30% more, for example up to about 20% more available silica in the amorphous phase than a fly ash made by the same method in the absence of the mineral additive.

The absolute value of available silica in the amorphous phase of the fly ash may, for example, increase by an absolute value of at least about 1 wt% in comparison to a fly ash made by the same method in the absence of the mineral additive (e.g. if the absolute value of the available silica in the amorphous phase of the fly ash made by the same method in the absence of the mineral additive was 10 wt%, the fly ash made by combusting fuel in the presence of the mineral additive would comprise at least about 11 wt% available silica in the amorphous phase). For example, the amount of available silica in the amorphous phase of the fly ash may increase by an absolute value of at least about 5 wt%, for example at least about 10 wt%, for example at least about 20 wt%, for example at least about 25 wt%, for example at least about 30 wt%, for example at least about 35 wt%, for example at least about 40 wt%, for example at least about 45 wt%, for example at least about 50 wt%, for example at least about 55 wt% in comparison to a fly ash made by the same method in the absence of the mineral additive.

The absolute value of available silica in the amorphous phase of the fly ash may, for example, increase by an absolute value of up to about 75 wt% in comparison to a fly ash made by the same method in the absence of the mineral additive (e.g. if the absolute value of the available silica in the amorphous phase of the fly ash made by the same method in the absence of the mineral additive was 10 wt%, the fly ash made by combusting fuel in the presence of the mineral additive would comprise up to about 85 wt% available silica in the amorphous phase). For example, the amount of available silica in the amorphous phase of the fly ash may increase by an absolute value of up to about 70 wt%, for example up to about 65 wt%, for example up to about 60 wt%, for example up to about 55 wt%, for example up to about 50 wt%, for example up to about 45 wt% in comparison to a fly ash made by the same method in the absence of the mineral additive.

The fly ash may, for example, comprise from about 1 wt% to about 100 wt% available silica in the amorphous phase. For example, the fly ash may comprise from about 5 wt% or about 10 wt% or about 15 wt% or about 20 wt% or about 25 wt% or about 30 wt% or about 35 wt% or about 40 wt% or about 45 wt% or about 50 wt% available silica in the amorphous phase. For example, the fly ash may comprise up to about 90 wt% or about 80 wt% or about 75 wt% or about 70 wt% or about 60 wt% or about 50 wt% or about 40 wt% or about 30 wt% or about 25 wt% or about 20 wt% available silica in the amorphous phase. The fly ash may, for example, comprise from about 25 wt% to about 95 wt% available silica in the amorphous phase, for example from about 30 wt% or from about 35 wt% to about 95 wt% or about 90 wt% or about 80 wt%. The fly ash may, for example, comprise from about 50 wt% to about 80 wt%, for example from about 55 wt% to about 75 wt%, for example from about 60 wt% to about 70 wt% available silica in the amorphous phase of the fly ash.

The amount of available silica in the amorphous phase of the fly ash may be determined, for example, by computation from the whole chemical analysis of the fly ash as obtained by ICP-MS (NF EN 14582 and NF EN ISO 11885) and from the quantitative X-Ray Diffraction as obtained by acquiring an X-Ray diffractogram on < 40 $\mu$m unoriented fly ash powder with 30% zincite as internal standard and modelling the diffractogram by Topas software (Bruker). The chemical composition of the amorphous phase may be computed and by computing the molar base/acid ratio in the amorphous phase and the wt% $SiO_2$, it is possible to compute the wt% available (reactive) $SiO_2$ (that is not linked to base). For example, the amount of available silica in the amorphous phase of the fly ash may be determined by the methods described in EN 197-1.

The fly ash may, for example, have a $Ca(OH)_2$ demand that is at least about 5% greater than the $Ca(OH)_2$ demand of a fly ash made by the same method in the absence of the mineral additive. For example, the fly ash may have a $Ca(OH)_2$ demand that is at least about 10% greater, or at least about 15% greater, or at least about 20% or at least about 25% greater or at least about 30% greater or at least about 35% greater or at least about 40% greater or at least about 45% greater or at least about 50% greater than the $Ca(OH)_2$ demand of a fly ash made by the same method in the absence of the mineral additive.

The fly ash may, for example, have a $Ca(OH)_2$ demand that is up to about 800% greater than the $Ca(OH)_2$ demand of a fly ash made by the same method in the absence of the mineral additive. For example, the fly ash may have a $Ca(OH)_2$ demand that is up to about 700% greater, for example up to about 600% greater, for example up to about 500% greater, for example up to about 400% greater, for example up to about 300% greater, for example up to about 200% greater, for example up to about 100% greater than the $Ca(OH)_2$ demand of a fly ash made by the same method in the absence of the mineral additive. For example, the fly ash may have a $Ca(OH)_2$ demand that is up to about 350% greater, for example up to about 320% greater, for example up to about 315% greater, for example up to about 300% greater, for example up to about 250% greater, for example up to about 200% greater, for example up to about 150% greater, for example up to about 100% greater, for example up to about 90% greater, for example up to about 80% greater, for example up to about 70% greater, for example up to about 60% greater, for example up to about 50% greater than the $Ca(OH)_2$ demand of a fly ash made by the same method in the absence of the mineral additive.

The fly ash may, for example, be an ash having a molar base/acid ratio of less than 1 (e.g. coal ash) and have a $Ca(OH)_2$ demand that is at least about 10% greater than the $Ca(OH)_2$ demand of a fly ash made by the same method in the absence of the mineral additive. For example, the fly ash may be an ash having a molar base/acid ratio of less than 1 (e.g. coal ash) and have a $Ca(OH)_2$ demand that is at least about 15% greater, for example at least about 20% greater or at least about 25% greater or at least about 30% greater or at least about 35% greater or at least about 40% greater or at least about 45% greater or at least about 50% greater than the $Ca(OH)_2$ demand of a fly ash made by the same method in the absence of the mineral additive.

The fly ash may, for example, be an ash having a molar base/acid ratio of less than 1 (e.g. coal ash) and have a $Ca(OH)_2$ demand that is up to about 300% greater than the $Ca(OH)_2$ demand of a fly ash made by the same method in the absence of the mineral additive. For example, the fly ash may be an ash having a molar base/acid ratio of less than 1 (e.g. coal ash) and have a $Ca(OH)_2$ demand that is up to about 250% greater, for example up to about 200% greater, for example up to about 150% greater, for example up to about 100% greater, for example up to about 90% greater, for example up to about 80% greater, for example up to about 70% greater, for example up to about 60% greater, for example up to about 50% greater than a fly ash made by the same method in the absence of the mineral additive.

The fly ash may, for example, be an ash having a molar base/acid ratio of more than 1 (e.g. woodpellets ash) and have a $Ca(OH)_2$ demand that is at least about 5% greater than the $Ca(OH)_2$ demand of a fly ash made by the same method in the absence of the mineral additive. For example, the fly ash may be an ash having a molar base/acid ratio of more than 1 (e.g. woodpellets ash) and have a $Ca(OH)_2$ demand that is at least about 10% greater, for example at least about 20% greater or at least about 30% greater or at least about 40% greater or at least about 50% greater or at least about 60% greater or at least about 70% greater or at least about 80% greater or at least about 90% greater or at least about 100% greater than the $Ca(OH)_2$ demand of a fly ash made by the same method in the absence of the mineral additive.

The fly ash may, for example, be an ash having a molar base/acid ratio of more than 1 (e.g. woodpellets ash) and have a $Ca(OH)_2$ demand that is up to about 800% greater than the $Ca(OH)_2$ demand of a fly ash made by the same method in the absence of the mineral additive. For example, the fly ash may have a $Ca(OH)_2$ demand that is up to about 700%, for example up to about 600% greater, for example up to about 500% greater, for example up to about 400% greater, for example up to about 300% greater, for example up to about 200% greater, for example up to about 100% greater than the $Ca(OH)_2$ demand of a fly ash made by the same method in the absence of the mineral additive. For example, the fly ash may have a $Ca(OH)_2$ demand that is up to about 350% greater, for example up to about 320% greater, for example up to about 315% greater, for example up to about 300% greater, for example up to about 250% greater, for example up to about 200% greater, for example up to about 150% greater, for example up to about 100% greater, for example up to about 90% greater, for example up to about 80% greater, for example up to about 70% greater, for example up to about 60% greater, for example up to about 50% greater than the $Ca(OH)_2$ demand of a fly ash made by the same method in the absence of the mineral additive.

The absolute value of the $Ca(OH)_2$ demand of the fly ash may, for example, increase by an absolute value of at least about 1 mg $Ca(OH)_2$ per gram of fly ash in comparison to a fly ash made by the same method in the absence of the mineral additive (e.g. if the absolute value of the $Ca(OH)_2$ demand of the fly ash made by the same method in the absence of the mineral additive was 100, the fly ash made by combusting fuel in the presence of the mineral additive would have a $Ca(OH)_2$ demand of at least about 101 mg $Ca(OH)_2$ per gram of fly ash). For example, the $Ca(OH)_2$ demand of the fly ash may increase by an absolute value of at least about 50, for example at least about 100, for example at least about 125, for example at least about 150, for example at least about 200, for example at least about 250 mg $Ca(OH)_2$ per gram of fly ash in comparison to a fly ash made by the same method in the absence of the mineral additive. For example, the absolute value of the $Ca(OH)_2$ demand of the fly ash may increase by at least about 300, for example at least about 350, for example at least about 400, for example at least about 450, for example at least about 500, for example at least about 550, for example at least about 600, for example at least about 650, for example at least about 700, for example at least about 750 mg $Ca(OH)_2$ per gram of fly ash in comparison to a fly ash made by the same method in the absence of the mineral additive.

The absolute value of the $Ca(OH)_2$ demand of the fly ash may, for example, increase by an absolute value of up to about 1300 mg $Ca(OH)_2$ per gram of fly ash in comparison to a fly ash made by the same method in the absence of the mineral additive (e.g. if the absolute value of the $Ca(OH)_2$ demand of the fly ash made by the same method in the absence of the mineral additive was 100, the fly ash made by combusting fuel in the presence of the mineral additive would have a $Ca(OH)_2$ demand of up to about 1400 mg $Ca(OH)_2$ per gram of fly ash). For example, the $Ca(OH)_2$ demand of the fly ash may increase by an absolute value of up to about 1200, for example up to about 1100, for example up to about 1000, for example up to about 900, for example up to about 800, for example up to about 700, for example up to about 600, for example up to about 550, for example up to about 500 mg $Ca(OH)_2$ per gram of fly ash in comparison to a fly ash made by the same method in the absence of the mineral additive.

The fly ash may, for example, have a $Ca(OH)_2$ demand ranging from about 350 mg $Ca(OH)_2$ per gram of fly ash to about 1500 mg $Ca(OH)_2$ per gram of fly ash. The fly ash may, for example, have a $Ca(OH)_2$ demand ranging from about 660 mg $Ca(OH)_2$ per gram of fly ash to about 1400 mg $Ca(OH)_2$ per gram of fly ash. For example, the fly ash may have a $Ca(OH)_2$ demand ranging from about 700, for example from about 800, for example from about 900 mg $Ca(OH)_2$ per gram of fly ash to about 1400, for example to about 1350, for example to about 1300 mg $Ca(OH)_2$ per gram of fly ash. For example, the fly ash may have a $Ca(OH)_2$ demand ranging from about 910 to about 1310 mg $Ca(OH)_2$ per gram of fly ash. For example, the fly ash may have a $Ca(OH)_2$ demand ranging from about 950, for example from about 1000, for example from about 1100 mg $Ca(OH)_2$ per gram of fly ash to about 1300, for example to about 1250, for example to about 1200, for example to about 1100 mg $Ca(OH)_2$ per gram of fly ash.

The $Ca(OH)_2$ demand of the fly ash may be measured, for example, by the modified Chapelle test. Details of the modified Chapelle test can be found in Largent, R. Bull. Liasons Lab. Pont Chauses, Vol. 93, 1978, pp 63 and described in the NF P18-513.

The fly ash may, for example, have a strength activity index in concrete that is at least about 5% greater than the strength activity index in concrete of a fly ash made by the same method in the absence of the mineral additive. For example, the fly ash may have a strength activity index in concrete that is at least about 6% greater, or 7% greater, or 8% greater, or 9% greater, or 10% greater, or 15% greater than the strength activity index in concrete of fly ash made by the same method in the absence of the mineral additive.

The fly ash may, for example, have a strength activity index in concrete that is up to about 80% greater than the strength activity index in concrete of a fly ash made by the same method in the absence of the mineral additive. For example, the fly ash may have a strength activity index in concrete that is up to about 70% greater, or up to about 60% greater, or up to about 50% greater, or up to about 40% greater, or up to about 30% greater, or up to about 20% greater, or up to about 15% greater than the strength activity index in concrete of fly ash made by the same method in the absence of the mineral additive.

The fly ash may, for example, be an ash having a molar base/acid ratio of less than 1 (e.g. coal ash) and have a strength activity index in concrete that is at least about 5% greater than the strength activity index in concrete of a fly ash made by the same method in the absence of the mineral additive. For example, the fly ash may be an ash having a molar base/acid ratio of less than 1 (e.g. coal ash) and have a strength activity index in concrete that is at least about 6% greater, or 7% greater, or 8% greater, or 9% greater, or 10% greater than the strength activity index in concrete of a fly ash made by the same method in the absence of the mineral additive.

The fly ash may for example, be an ash having a molar base/acid ratio of less than 1 (e.g. coal ash) and have a strength activity index in concrete that is up to about 70% greater than the strength activity index concrete of a fly ash made by the same method in the absence of the mineral additive. For example, the fly ash may be an ash having a molar base/acid ratio of less than 1 (e.g. coal ash) and have a strength activity index in concrete that is up to about 60% greater, or about 50% greater, or about 40% greater, or about 30% greater, or about 20% greater, or about 15% greater, or about 10% greater, or about 9% greater than the strength activity index in concrete of a fly ash made by the same method in the absence of the mineral additive.

The fly ash may, for example, be an ash having a molar base/acid ratio of greater than 1 (e.g. woodpellets ash) and have a strength activity index in concrete that is at least about 5% greater than the strength activity index in concrete of a fly ash made by the same method in the absence of the mineral additive. For example, the fly ash may be an ash having a molar base/acid ratio of greater than 1 (e.g. woodpellets ash) and have a strength activity index in concrete that is at least about 6% greater, or 7% greater, or 8% greater, or 9% greater, or 10% greater than the strength activity index in concrete of a fly ash made by the same method in the absence of the mineral additive.

The fly ash may for example, be an ash having a molar base/acid ratio of greater than 1 (e.g. woodpellets ash) and have a strength activity index in concrete that is up to about 80% greater than the strength activity index in concrete of a fly ash made by the same method in the absence of the mineral additive. For example, the fly ash may be an ash having a molar base/acid ratio of less than 1 (e.g. coal ash) and have a strength activity index in concrete that is up to about 60% greater, or about 50% greater, or about 40% greater, or about 30% greater, or about 20% greater, or about 15% greater, or about 10% greater, or about 9% greater than the strength activity index in concrete of a fly ash made by the same method in the absence of the mineral additive.

The absolute value of the strength activity index of the fly ash in concrete may, for example, increase by an absolute value of at least about 1 in comparison to a fly ash made by the same method in the absence of the mineral additive (e.g. if the strength activity index in concrete of the fly ash made by the same method in the absence of the mineral additive was 10, the fly ash made by combusting fuel in the presence of the mineral additive would have a strength activity index of at least about 11). For example, the absolute value of the strength activity index of the fly ash in concrete may increase by an absolute value of at least about 2, for example at least about 5, for example at least about 10 in comparison to a fly ash made by the same method in the absence of the mineral additive. For example, the strength activity index of the fly ash in concrete may increase by an absolute value of at least about 15, for example at least about 20, for example at least about 25, for example at least about 30, for example at least about 35, for example at least about 40 in comparison to a fly ash made by the same method in the absence of the mineral additive.

The absolute value of the strength activity index of the fly ash in concrete may, for example, increase by an absolute value of up to about 80 in comparison to a fly ash made by the same method in the absence of the mineral additive (e.g. if the strength activity index in concrete of the fly ash made by the same method in the absence of the mineral additive was 10, the fly ash made by combusting fuel in the presence of the mineral additive would have a strength activity index of up to about 90). For example, the strength activity index of the fly ash in concrete may increase by an absolute value of up about 75, for example up to about 70, for example up to about 65, for example up to about 60, for example up to about 55, for example up to about 50, for example up to about 45 in comparison to a fly ash made by the same method in the absence of the mineral additive.

The fly ash may, for example, have a strength activity index in concrete ranging from about 75 to about 150. For example, the fly ash may have a strength activity index in concrete ranging from about 80 to about 140, for example ranging from about 85 to about 130. For example, the fly ash may have a strength activity index in concrete ranging from about 85 to about 135, for example from about 90 to about 130, for example from about 95 to about 125, for example from about 100 to about 120.

The strength activity index may, for example, be measured by the method described in ASTM C311 or EN 450-1:2012 (e.g. by the method described in ASTM C109, C109M, C150, C618 or EN 196-1:2005). The strength activity index may, for example, be the strength activity index at 28 days.

The fly ash may, for example, have a loss-on-ignition (LOI) that is at least about 5% less than the LOI of a fly ash made by the same method in the absence of the mineral additive. For example, the fly ash may have a LOI that is at least about 10% less, or at least about 15% less, or at least about 20% less, or at least about 25% less, or at least about 30% less, or at least about 35% less, or at least about 40% less than the LOI of a fly ash made by the same method in the absence of the mineral additive.

The fly ash may, for example, have a loss-on-ignition (LOI) that is up to about 100% less than the LOI of a fly ash made by the same method in the absence of the mineral additive. For example, the fly ash may have a LOI that is up to about 99% less, or up to about 95% less, or up to about 90% less, or up to about 85% less, or up to about 80% less, or up to about 70% less, or up to about 72% less, or up to about 70% less, or up to about 60% less, or up to about 50% less, or up to about 40% less, or up to about 30% less, or up to about 28% less, or up to about 25% less than the LOI of a fly ash made by the same method in the absence of the mineral additive.

The fly ash may, for example, be an ash having a molar base/acid ratio of less than 1 (e.g. coal ash) and have a LOI that is at least about 15% less, for example at least about 16% less or at least about 17% less or at least about 18% less or at least about 19% less or at least about 20% less than the LOI of a fly ash made by the same method in the absence of the mineral additive.

The fly ash may, for example, be an ash having a molar base/acid ratio of less than 1 (e.g. coal ash) and have a LOI that is up to about 90% less, for example up to about 80% less, for example up to about 70% less, for example up to about 60% less, for example up to about 50% less, for example up to about 40% less, for example up to about 35% less, for example up to about 30% less or up to about 28% less or up to about 25% less than the LOI of a fly ash made by the same method in the absence of the mineral additive.

The fly ash may, for example, be an ash having a molar base/acid ratio of greater than 1 (e.g. woodpellets ash) and have a LOI that is at least about 30% less than the LOI of a fly ash made by the same method in the absence of the mineral additive. For example, the fly ash may be an ash having a molar base/acid ratio of greater than 1 (e.g. woodpellets ash) and have a LOI that is at least about 35% less or at least about 40% less or at least about 45% less or at least about 50% less than the LOI of a fly ash made by the same method in the absence of the mineral additive.

The fly ash may, for example, be an ash having a molar base/acid ratio of greater than 1 (e.g. woodpellets ash) and have a LOI that is up to about 100% less, for example up to about 99% less, for example up to about 90% less, for example up to about 80% less, for example up to about 75% less, for example up to about 72% less, for example up to about 70% less than the LOI of a fly ash made by the same method in the absence of a mineral additive. For example, the fly ash may be an ash having a molar base/acid ratio of greater than 1 (e.g. woodpellets ash) and have a LOI that is up to about 60% less, for example up to about 50% less, for example up to about 45% less, for example up to about 40% less than the LOI of a fly ash made by the same method in the absence of the mineral additive.

The absolute value of the LOI of the fly ash may, for example, decrease by an absolute value of at least about 1% in comparison to a fly ash made by the same method in the absence of the mineral additive (e.g. if the absolute value of the LOI of the fly ash made by the same method in the absence of the mineral additive was 10%, the fly ash made by combusting fuel in the presence of the mineral additive would have a LOI of at least about 9%). For example, the LOI of the fly ash may decrease by an absolute value of at least about 2%, for example at least about 5% in comparison to a fly ash made by the same method in the absence of the mineral additive. For example, the LOI of the fly ash may decrease by an absolute value of at least about 5.5%, for example at least about 6%, for example at least about 6.5% in comparison to a fly ash made by the same method in the absence of the mineral additive. For example, the LOI of the fly ash may decrease by an absolute value of at least about 10%, for example at least about 15%, for example at least about 20%, for example at least about 23%, for example at least about 24%, for example at least about 25% in comparison to a fly ash made by the same method in the absence of the mineral additive.

The absolute value of the LOI of the fly ash may, for example, decrease by an absolute value of up to about 30% in comparison to a fly ash made by the same method in the absence of the mineral additive (e.g. if the absolute value of the LOI of the fly ash made by the same method in the absence of the mineral additive was 40%, the fly ash made by combusting fuel in the presence of the mineral additive would have a LOI of up to about 10%). For example, the LOI of the fly ash may decrease by an absolute value of up to about 29.99%, for example up to about 29%, for example up to about 28%, for example up to about 27%, for example up to about 25%, for example up to about 20%, for example up to about 15%, for example up to about 10% in comparison to a fly ash made by the same method in the absence of the mineral additive. For example, the LOI of the fly ash may decrease by an absolute value of up to about 7%, for example up to about 6.99%, for example up to about 6.5%, for example up to about 6.0% in comparison to a fly ash made by the same method in the absence of the mineral additive.

The fly ash may, for example, have a LOI ranging from about 0.01% to about 9%. For example, the fly ash may have a LOI ranging from about 0.01% to about 8% or about 7% or about 6% or about 5% or about 4%. For example, the fly ash may have a LOI ranging from about 0.1% to about 3.5%, for example ranging from about 0.5% to about 3.0%, for example from about 0.5% to about 2.5%, for example from about 0.5% to about 2.0%. For example, the fly ash may have a LOI ranging from about 0.01% to about 2.0%, for example from about 0.1% to about 1.5%, for example from about 0.5% to about 1.0%.

The LOI may, for example, be measured by the method described in EN 450-1:2012 or EN 196-2 or ASTM C314.

The fly ash may, for example, comprise a decreased amount of unburnt carbon, for example, in comparison to a fly ash produced by the same method in the absence of the mineral additive. For example, the fly ash may comprise at least about 5% less unburnt carbon than a fly ash produced by the same method in the absence of the mineral additive. For example, the fly ash may comprise at least about 10% or at least about 15% or at least about 20% or at least about 25% or at least about 30% or at least about 35% or at least about 40% or at least about 45% or at least about 50% less unburnt carbon than a fly ash produced by the same method in the absence of the mineral additive.

The fly ash may, for example, comprise up to about 100% less unburnt carbon than a fly ash produced by the same method in the absence of the mineral additive. For example, the fly ash may comprise up to about 95% or up to about 90% or up to about 85% or up to about 80% or up to about 75% or up to about 70% or up to about 65% or up to about 60% or up to about 55% less unburnt carbon than a fly ash produced by the same method in the absence of the mineral additive.

The "fly ash made by the same method in the absence of the mineral additive" is the fly ash made by exactly the same method as the method of the invention except that the method does not involve combusting the fuel in the presence of the mineral additive used in the method of the invention (e.g. a mineral additive comprising at least one silicate such as an aluminosilicate). For example, the method may be carried out in exactly the same type of power plant using the same fuel and the reaction may be carried out at the same temperature for the same period of time. For example, the method may be carried out in the absence of any mineral additive. For example, the method may be carried out in the absence of a mineral additive described herein but in the presence of a different mineral additive.

The fly ash may, for example, have any one or more of the chemical requirements or physical requirements or supplementary optional physical requirements described in ASTM C618-12a or EN 450-1:2012, the contents of which are incorporated herein by reference. For example, the fly ash may have all of the chemical and physical requirements identified in Tables 1 and 2 of ASTM C618-12a. For example, the fly ash may have all of the chemical and physical requirements identified in Tables 1 and 2 of ASTM C618-12a and one or more of the supplementary optional physical requirements identified in Table 3 of ASTM C618-12a. As indicated in ASTM C618-12a, the chemical and physical requirements may be measured in accordance with the requirements of the test methods described in ASTM C311.

The fly ash may, for example, have any one or more of the chemical requirements or physical requirements or supplementary optional physical requirements of Class F fly ash described in ASTM C618-1a. For example, the fly ash may have all of the chemical and physical requirements identified in Tables 1 and 2 of ASTM C618-12a of Class F fly ash. For example, the fly ash may have all of the chemical and physical requirements identified in Tables 1 and 2 of ASTM C618-12a and one or more of the supplementary optional physical requirements identified in Table 3 of ASTM C618-12a of Class F fly ash.

The fly ash may, for example, have any one or more of the chemical requirements or physical requirements or supplementary optional physical requirements of Class C fly ash described in ASTM C618-1a. For example, the fly ash may have all of the chemical and physical requirements identified in Tables 1 and 2 of ASTM C618-12a of Class C fly ash. For example, the fly ash may have all of the chemical and physical requirements identified in Tables 1 and 2 of ASTM C618-12a and one or more of the supplementary optional physical requirements identified in Table 3 of ASTM C618-12a of Class C fly ash. The fly ash may, for example, have any one or more of the chemical requirements or physical requirements or supplementary optional physical requirements of Class N fly ash described in ASTM C618-1a. For example, the fly ash may have all of the chemical and physical requirements identified in Tables 1 and 2 of ASTM C618-12a of Class N fly ash. For example, the fly ash may have all of the chemical and physical requirements identified in Tables 1 and 2 of ASTM C618-12a and one or more of the supplementary optional physical requirements identified in Table 3 of ASTM C618-12a of Class N fly ash.

For example, the fly ash may have at least 70.0% silicon dioxide ($SiO_2$) plus aluminium oxide ($Al_2O_3$) plus iron oxide ($Fe_2O_3$) and/or a maximum of 5.0% sulphur trioxide and/or a maximum moisture content of 3.0% and/or a maximum loss-on-ignition of 6.0%. For example, the fly ash may have maximum fineness of 34% (% retained when wet-sieved on 45 $\mu$m (No. 325) sieve) and/or a minimum of 75% strength activity index with Portland cement at 7 days and/or 28 days and/or a maximum of 105% water requirement and/or a maximum of 0.8% autoclave expansion or contraction and/or a maximum variation of density of 5% from average and/or a maximum variation of % retained on a 45 $\mu$m (No. 325) sieve of 5% from average. These properties are measured as described in ASTM C618-12a.

For example, the fly ash may have at least 50.0% silicon dioxide ($SiO_2$) plus aluminium oxide ($Al_2O_3$) plus iron oxide ($Fe_2O_3$) and/or a maximum of 5.0% sulphur trioxide and/or a maximum moisture content of 3.0% and/or a maximum loss-on-ignition of 6.0%. For example, the fly ash may have maximum fineness of 34% (% retained when wet-sieved on 45 $\mu$m (No. 325) sieve) and/or a minimum of 75% strength activity index with Portland cement at 7 days and/or 28 days and/or a maximum of 105% water requirement and/or a maximum of 0.8% autoclave expansion or contraction and/or a maximum variation of density of 5% from average and/or a maximum variation of % retained on a 45 $\mu$m (No. 325) sieve of 5% from average. These properties are measured as described in ASTM C618-12a.

For example, the fly ash may have at least 70.0% silicon dioxide ($SiO_2$) plus aluminium oxide ($Al_2O_3$) plus iron oxide ($Fe_2O_3$) and/or a maximum of 4.0% sulphur trioxide and/or a maximum moisture content of 3.0% and/or a maximum loss-on-ignition of 10.0%. For example, the fly ash may have maximum fineness of 34% (% retained when wet-sieved on 45 $\mu$m (No. 325) sieve) and/or a minimum of 75% strength activity index with Portland cement at 7 days and/or 28 days and/or a maximum of 115% water requirement and/or a maximum of 0.8% autoclave expansion or contraction and/or a maximum variation of density of 5% from average and/or a maximum variation of % retained on a 45 $\mu$m (No. 325) sieve of 5% from average. These properties are measured as described in ASTM C618-12a.

For example, the fly ash may have a maximum of 0.03 % increase of drying shrinkage of mortar bars at 28 days over control and/or the quantity of air-entraining agent required to produce an air content of 18.0 vol% of mortar may not vary from the average established by the ten preceding tests or by all preceding tests if less than ten by more than 20 % and/or the expansion of test mixture as a percentage of low-alkali cement control at 14 days may be a maximum of 100 % and/or the expansion of test mixture for moderate sulphate exposure after 6 months exposure may be a maximum of 0.10 % and/or the expansion of test mixture for high sulphate exposure after 6 months exposure may be a maximum of 0.05 % and/or the expansion of test mixture as a percentage of sulphate resistance cement control after at least 6 months exposure may be a maximum of 100 %. These properties are measured as described in ASTM C618-12a.

*Uses of the Fly Ash*

The present invention provides the use of fly ash as a pozzolan. This means that it has little or no cementitious (e.g. binding) effect itself, but will react with calcium hydroxide in the presence of water to form compounds possessing cementitious properties. The present invention also provides the use of fly ash in a cementitious composition such as cement (e.g. Portland cement or blended cements) or concrete. For example, the fly ash may be used as a pozzolan in said cementitious composition. Thus, there is also provided herein a cementitious composition such as cement (e.g. Portland cement or blended cements) or concrete comprising fly ash.

There is further provided herein a method of making a cementitious composition such as cement or concrete. The method may, for example, comprise providing a fly ash described herein (e.g. made by the method described herein), and combining said fly ash with a calcium-based and/or silicate-based material, wherein the fly ash acts as a pozzolan to form a cementitious composition. The calcium-based and/or silicate-based material may, for example, be Portland cement.

The fly ash may, for example, be a fly ash obtained by or obtainable any method described herein, including all embodiments thereof. The fly ash may, for example, be as described above. For example, the fly ash may, for example, be a fly ash with a particular pozzolanic activity.

When making a cementitious composition according to the present invention, the components of the composition may suitably be added to the composition in any order and/or combination. For example, the fly ash may be mixed with the calcium-based and/or silicate-based material (e.g. Portland cement) to form a cementitious composition. This cementitious composition may subsequently be added to a granular aggregate material to make a concrete composition. Alternatively, Portland cement and the fly ash may be added separately to a granular material (in any order) to make a concrete composition.

The cementitious composition may, for example, be cement. The cementitious composition may, for example, comprise Portland cement and the fly ash. Portland cement is a fine powder produced by grinding Portland cement clinker, calcium sulphate and up to about 5 wt% minor constituents according to the appropriate standards. Portland cement clinker is a hydraulic material which consists of at least two thirds by mass of calcium silicates, the remainder comprising aluminium and iron containing clinker phases and other compounds. The ratio of CaO to $SiO_2$ may typically not be less than 2 and the MgO content may not exceed 5% by mass. Typical constituents in mass percent of Portland clinker are tricalcium silicate (45-75%), dicalcium silicate (7-32%), tricalcium aluminate (0-13%), tetracalcium aluminoferrite (0-18%), gypsum, i.e. calcium sulphate (2-10%) and in Portland cement are calcium oxide (61-67%), silicon oxide (19-23%), aluminium oxide (2.5-6%), ferric oxide (0-6%). The Portland cement may, for example, be ordinary Portland cement (OPC). The Portland cement may, for example, be white Portland cement. For example, the Portland cement may be ASTM C150 Portland cement (e.g. any one or more of types I, II, III, IV, V, Ia, IIa, IIIa, II(MH) and II(MH)a). For example, the Portland cement may be EN 197 (e.g. any one or more of classes I, II, III, IV and V). The Portland cement may, for example, include those components that satisfy British Standard BS12 (EN 197-1:2000). The use of the fly ash described herein as a pozzolan may, for example, reduce the amount of Portland cement that is needed/used in cementitious compositions such as concrete.

Concrete is a composite material comprising a granular aggregate material embedded in a hard matrix of material (e.g. a binder composition such as cement). Concrete may, for example, comprise any one or more of gravel, crushed stone, sand, cement binder, water, chemical additives, mineral additives, and other additives, such as, for example, fibers. The composite is formed by combining the components in accordance with established practice and standards, depending on the type of concrete required and its intended use. Aggregates can be up to 20 mm in size, for example, about 10 mm in size. Examples of chemical additives are superplasticisers, air entrainers, retarders, accelerators, pigments and corrosion inhibitors.

The concrete compositions may, for example, be selected from one or more of high performance concrete, high strength concrete, lightweight concrete, precast and poured-mold concrete, slab concrete, self-compacting concrete, glass fiber reinforced concrete and special concretes for hostile environment.

The concrete compositions may, for example, comprise from about 5 wt% to about 75 wt% fly ash. For example, the concrete compositions may comprise from about 10 wt% to about 65 wt% fly ash, for example from about 20 wt% to about 55 wt% or 50 wt% fly ash. For example from about 25 wt% to about 50 wt% fly ash.

## EXAMPLES

### Example 1

Fly ash was made by combusting a fuel comprising 80% Central Appalachian High S-Fe and 20% PRB High K, Na coal in the presence of a hydrous aluminosilicate in a 300 MWe PC furnace under negative pressure. The furnace was fed with 2600 tonnes of fuel per day and 0.6 to 1.6% of dry hydrous aluminosilicate was used based on the total weight of fuel. The hydrous aluminosilicate was made in slurry form and injected onto the coal conveyor belt before bunkering. The combustion produced approximately 10% ash based on the total amount of fuel used, approximately 15% of which was bottom ash and 85% of which was fly ash.

The % ash content in dry fuel at 550°C, strength activity index, % amorphous content of the ash, % available silica in the amorphous phase of the ash, $Ca(OH)_2$ demand and LOI of the ash was determined by the methods described above.

The results are shown in Table 1.

Table 1.

| System | % Mineral Additive on Dry Fuel | % Ash (d.b. 550°C) | Strength Activity Index | Pozzolanic Activity | | | LOI (%) |
|---|---|---|---|---|---|---|---|
| | | | | % Amorphous Phase Content | % Available Silica in Amorphous Phase | Ca(OH)$_2$ demand (mg per g of fly ash) | |
| Coal type | 0 | 11.5 | 78 | 64 | 39.50 | 245 | 8.97 |
| | 1.6 | 11.5 | 80 | 62 | 42.60 | 406 | 7.23 |

Example 2

Fly ash was made by combusting a fuel comprising calcium and potassium rich fuel pellets having an ash content from about 0.2 wt% to about 1.1 wt% in the presence of hydrous aluminosilicate in a 300 MWe PC boiler. The furnace was fed with 150 tonnes of fuel per hour and either 0 or 1 % of dry hydrous aluminosilicate based on the total weight of fuel.

The % ash content in dry fuel at 550°C, strength activity index, % amorphous content of the ash, % available silica in the amorphous phase of the ash, Ca(OH)$_2$ demand and LOI of the ash was determined by the methods described above.

The results are shown in Table 2.

Table 2.

| System | % Mineral Additive on Dry Fuel | % Ash (d.b. 550°C) | Strength Activity Index | Pozzolanic Activity | | | LOI (%) |
|---|---|---|---|---|---|---|---|
| | | | | % Amorphous Phase Content | % Available Silica in Amorphous Phase | Ca(OH)$_2$ demand (mg per g of fly ash) | |
| Wood pellets type | 0 | 0.55 | 72 | 51 | 0.00 | 195 | 24.11 |
| | 1 | 0.55 | 79 | 61 | 21.07 | 391 | 11.29 |

Example 3

Fly ash was made by combusting 100% Illinois Basin coal in the presence of a hydrous aluminosilicate in a 1300 MWe PC furnace under negative pressure. The furnace was fed with 11000 tonnes of fuel per day and 1% of dry hydrous aluminosilicate was used based on the total weight of fuel. The hydrous aluminosilicate was made in slurry form and injected onto the coal conveyor belt before bunkering. The combustion produced approximately 10% ash based on the total amount of fuel used, approximately 15% of which was bottom ash and 85% of which was fly ash.

The % ash content in dry fuel at 550°C, strength activity index, % amorphous content of the ash, % available silica in the amorphous phase of the ash, Ca(OH)$_2$ demand and LOI of the ash was determined by the methods described above.

The results are shown in Table 3.

Table 3.

| System | % Mineral Additive on Dry Fuel | % Ash (d.b. 550°C) | Strength Activity Index | Pozzolanic Activity | | | LOI (%) |
|---|---|---|---|---|---|---|---|
| | | | | % Amorphous Phase Content | % Available Silica in Amorphous Phase | Ca(OH)$_2$ demand (mg per g of fly ash) | |
| Coal type | 0 | 9.1 | 94 | 76 | 39.12 | 380 | 3.55 |
| | 1 | 11.5 | 93 | 75 | 43.47 | 520 | 2.44 |

**Claims**

1. Use of a fly ash as a pozzolan, wherein the fly ash is obtained by a method comprising:
   combusting a fuel in the presence of a mineral additive to produce a fly ash, wherein the mineral additive comprises at least one silicate, wherein the at least one silicate is selected from aluminosilicates, wherein the mineral additive comprises less than 20 wt% calcium oxide, and wherein the mineral additive is combined with the fuel prior to combustion and/or added to the furnace during combustion.

2. The use of claim 1, wherein the fly ash acts as a pozzolan in a cementitious composition, for example cement or concrete.

3. A method of making a cementitious composition, for example concrete, the method comprising:

   providing a fly ash made by a method comprising combusting a fuel in the presence of a mineral additive to produce a fly ash, wherein the mineral additive comprises at least one silicate, wherein the at least one silicate is selected from aluminosilicates, wherein the mineral additive comprises less than 20 wt% calcium oxide, and wherein the mineral additive is combined with the fuel prior to combustion and/or added to the furnace during combustion, and
   combining the fly ash with a calcium-based and/or silicate-based material and optionally a granular aggregate material,
   wherein the fly ash acts as a pozzolan to form the cementitious composition.

4. The use or method of any preceding claim, wherein the aluminosilicate is selected from the group consisting of kaolin, halloysite, ball clay, lump clay, bauxite clay, calcined clay, smectite, bentonite, clayey marl, marl, calcerous marl, andalusite, kyanite, sillimanite, perlite, mica, chlorite, attapulgite or paylgorskite and pyrophyllite.

5. The use or method of any preceding claim, wherein the % of dry silicate added to the wet fuel relative to the % of ash in the dry fuel at 550°C ranges from 0.01 to 10.

6. The use or method of any preceding claim, wherein the mineral additive further comprises an alkaline earth metal-containing mineral, for example a magnesium-containing mineral or a calcium-containing mineral.

7. The use or method of any preceding claim, wherein the mineral additive further comprises one or more of calcium carbonate, limestone, marble, chalk, dolomite, aragonitic sand, sea shells, coral, cement kiln dust, talc, brucite, magnesium carbonate, a magnesium carbonate-containing mineral and a calcium-carbonate containing mineral.

8. The use or method of any preceding claim, wherein the mineral additive further comprises a high surface area silicate mineral such as diatomaceous earth.

9. The use or method of any preceding claim, wherein the mineral additive comprises from 15 wt% to 100 wt% total silicate, for example from 20 wt% or from 40 wt% to 85 wt% silicate.

10. The use or method of any preceding claim, wherein the fuel comprises one or more of coal, petroleum coke, lignite, biofuel and refuse-derived fuel.

11. The use or method of any preceding claim, wherein the method is carried out in a fossil fuel plant or a biomass power plant or a waste-to-energy power plant.

**Patentansprüche**

1. Verwendung einer Flugasche als Puzzolan, wobei die Flugasche durch ein Verfahren erlangt wird, umfassend:
   Verbrennen eines Brennstoffs in Anwesenheit eines mineralischen Zusatzstoffs, um eine Flugasche zu erzeugen, wobei der mineralische Zusatzstoff mindestens ein Silikat umfasst, wobei das mindestens eine Silikat ausgewählt ist aus Aluminosilikaten, wobei der mineralische Zusatzstoff weniger als 20 Gewichtsprozent Calciumoxid umfasst und wobei der mineralische Zusatzstoff vor der Verbrennung mit dem Brennstoff kombiniert und/oder während der Verbrennung zu dem Ofen hinzugefügt wird.

**2.** Verwendung gemäß Anspruch 1, wobei die Flugasche in einer zementhaltigen Zusammensetzung, z. B. Zement oder Beton, als Puzzolan wirkt.

**3.** Verfahren zum Herstellen einer zementhaltigen Zusammensetzung, zum Beispiel Beton, das Verfahren umfassend:

Bereitstellen einer Flugasche, die durch ein Verfahren gefertigt wird, umfassend ein Verbrennen eines Brennstoffs in Anwesenheit eines mineralischen Zusatzstoffs, um eine Flugasche zu erzeugen, wobei der mineralische Zusatzstoff mindestens ein Silikat umfasst, wobei das mindestens eine Silikat ausgewählt ist aus Aluminosilikaten, wobei der mineralische Zusatzstoff weniger als 20 Gewichtsprozent Calciumoxid umfasst und wobei der mineralische Zusatzstoff vor der Verbrennung mit dem Brennstoff kombiniert und/oder während der Verbrennung zu dem Ofen hinzugefügt wird, und
Kombinieren der Flugasche mit einem Material auf Calcium- und/oder Silikatbasis und optional einem körnigen Zuschlagmaterial,
wobei die Flugasche als Puzzolan wirkt, um die zementhaltige Zusammensetzung zu bilden.

**4.** Verwendung oder Verfahren gemäß einem vorherigen Anspruch, wobei das Alumosilikat ausgewählt ist aus der Gruppe, bestehend aus Kaolin, Halloysit, Kugelton, Klumpenton, Bauxitton, kalziniertem Ton, Smektit, Bentonit, tonhaltigem Mergel, Mergel, kalkhaltigem Mergel, Andalusit, Kyanit, Sillimanit, Perlit, Glimmer, Chlorit, Attapulgit oder Paylgorskit und Pyrophyllit.

**5.** Verwendung oder Verfahren gemäß einem vorherigen Anspruch, wobei der Prozentsatz des trockenen Silikats, der zu dem nassen Brennstoff hinzugefügt wird, bezogen auf den Prozentsatz der Asche in dem trockenen Brennstoff bei 550 °C in einem Bereich von 0,01 bis 10 ist.

**6.** Verwendung oder Verfahren gemäß einem vorherigen Anspruch, wobei der mineralische Zusatzstoff ferner ein erdalkalimetallhaltiges Mineral, z. B. ein magnesiumhaltiges Mineral oder ein calciumhaltiges Mineral, umfasst.

**7.** Verwendung oder Verfahren gemäß einem vorherigen Anspruch, wobei der mineralische Zusatzstoff ferner eines oder mehrere von Calciumkarbonat, Kalkstein, Marmor, Kreide, Dolomit, aragonitischer Sand, Muscheln, Koralle, Zementofenstaub, Talk, Brucit, Magnesiumkarbonat, ein magnesiumkarbonathaltiges Mineral und ein calciumkarbonathaltiges Mineral umfasst.

**8.** Verwendung oder Verfahren gemäß einem vorherigen Anspruch, wobei der mineralische Zusatzstoff ferner ein Silikatmineral mit großer Oberfläche, wie beispielsweise Diatomeenerde, umfasst.

**9.** Verwendung oder Verfahren gemäß einem vorherigen Anspruch, wobei der mineralische Zusatzstoff von 15 bis 100 Gewichtsprozent Gesamtsilikat, beispielsweise 20 oder 40 bis 85 Gewichtsprozent Silikat, umfasst.

**10.** Verwendung oder Verfahren gemäß einem vorherigen Anspruch, wobei der Brennstoff eines oder mehrere von Kohle, Petrolkoks, Braunkohle, Biobrennstoff und aus Abfall gewonnenem Brennstoff umfasst.

**11.** Verwendung oder Verfahren gemäß einem vorherigen Anspruch, wobei das Verfahren in einem Kraftwerk für fossile Brennstoffe, einem Biomassekraftwerk oder einem Müllverbrennungskraftwerk durchgeführt wird.

**Revendications**

**1.** Utilisation de cendres volantes comme pouzzolane, dans laquelle les cendres volantes sont obtenues par un procédé comprenant :
la combustion d'un combustible en présence d'un additif minéral pour produire des cendres volantes, dans lequel l'additif minéral comprend au moins un silicate, dans lequel l'au moins un silicate est choisi parmi les aluminosilicates, dans lequel l'additif minéral comprend moins de 20 % en poids d'oxyde de calcium, et dans lequel l'additif minéral est combiné avec le combustible avant la combustion et/ou ajouté au four pendant la combustion.

**2.** L'utilisation selon la revendication 1, dans laquelle les cendres volantes agissent comme pouzzolane dans une composition cimentaire, par exemple le ciment ou le béton.

**3.** Un procédé de fabrication d'une composition cimentaire, par exemple du béton, le procédé comprenant :

la fourniture de cendres volantes fabriquées par un procédé comprenant la combustion d'un combustible en présence d'un additif minéral pour produire des cendres volantes, dans lequel l'additif minéral comprend au moins un silicate, dans lequel l'au moins un silicate est choisi parmi les aluminosilicates, dans lequel l'additif minéral comprend moins de 20 % en poids d'oxyde de calcium, et dans lequel l'additif minéral est combiné avec le combustible avant la combustion et/ou ajouté au four pendant la combustion, et

la combinaison des cendres volantes avec un matériau à base de calcium et/ou de silicate et éventuellement un matériau d'agrégat granulaire,

dans lequel les cendres volantes agissent comme pouzzolane pour former la composition cimentaire.

4. L'utilisation ou le procédé selon l'une quelconque des revendications précédentes, dans lequel l'aluminosilicate est choisi dans le groupe constitué par le kaolin, l'halloysite, l'argile plastique, l'argile en morceaux, l'argile de bauxite, l'argile calcinée, la smectite, la bentonite, la marne argileuse, la marne, la marne-calcaire, l'andalousite, le disthène, la sillimanite, la perlite, le mica, la chlorite, l'attapulgite ou la paylgorskite, et la pyrophyllite.

5. L'utilisation ou le procédé selon l'une quelconque des revendications précédentes, dans lequel le pourcentage de silicate sec ajouté au combustible humide par rapport au pourcentage de cendres dans le combustible sec à 550 °C est compris entre 0,01 et 10.

6. L'utilisation ou le procédé selon l'une quelconque des revendications précédentes, dans lequel l'additif minéral comprend en outre un minéral contenant un métal alcalino-terreux, par exemple un minéral contenant du magnésium ou un minéral contenant du calcium.

7. L'utilisation ou le procédé selon l'une quelconque des revendications précédentes, dans lequel l'additif minéral comprend en outre un ou plusieurs parmi le carbonate de calcium, le calcaire, le marbre, la craie, la dolomite, le sable d'aragonite, les coquillages, le corail, la poussière de four à ciment, le talc, la brucite, le carbonate de magnésium, un minéral contenant du carbonate de magnésium et un minéral contenant du carbonate de calcium.

8. L'utilisation ou le procédé selon l'une quelconque des revendications précédentes, dans lequel l'additif minéral comprend en outre un minéral silicaté de grande superficie tel que la terre de diatomées.

9. L'utilisation ou le procédé selon l'une quelconque des revendications précédentes, dans lequel l'additif minéral comprend de 15 % en poids à 100 % en poids de silicate total, par exemple de 20 % en poids ou de 40 % en poids à 85 % en poids de silicate.

10. L'utilisation ou le procédé selon l'une des revendications précédentes, dans lequel le combustible comprend un ou plusieurs parmi le charbon, le coke de pétrole, le lignite, un biocarburant et un combustible dérivé de déchets.

11. L'utilisation ou le procédé selon l'une quelconque des revendications précédentes, dans lequel le procédé est mis en œuvre dans une centrale à combustible fossile ou une centrale à biomasse ou une centrale de valorisation énergétique des déchets.

**EP 3 207 002 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8741054 B

**Non-patent literature cited in the description**

- **LARGENT, R.** *Bull. Liasons Lab. Pont Chauses,* 1978, vol. 93, 63